# EUROPEAN PATENT SPECIFICATION

(11) **EP 0 447 370 B1**
(45) Date of publication and mention of the grant of the patent: **10.08.1994**
(21) Application number: 91830051.8
(22) Date of filing: 18.02.1991
(51) Int. Cl.: F16J 1/12, F16B 17/00, B23P 11/00

(54) **Method and equipment for fixing a piston onto a rod**
Verfahren und Vorrichtung zur Verbindung eines Kolbens mit seiner Kolbenstange
Méthode et équipement pour la fixation d'un piston sur sa tige

(30) Priority: 15.03.1990 IT 513490
(43) Date of publication of application: 18.09.1991
(73) Proprietor: TRW ITALIA S.P.A., Gardone V.T. (BS) (IT)
(72) Inventor: Bertagna, Bruno, I-25063 Gardone V.T. (Brescia) (IT); Tanfoglio, Vincenzo, I-25100 Brescia (IT)
(74) Representative: Manzoni, Alessandro

(56) References cited:
- EP-A- 0 033 251
- EP-A- 0 126 698
- FR-A- 2 533 983
- GB-A- 1 117 777

## Description

The present invention relates to a method and equipment for fixing or closing a piston body onto a piston rod, and in particular relates to servodrive pistons.

The fixing of a body which is designed to make up a piston on a piston rod is presently carried out with the help of elastic stop rings which are fitted into grooves formed on the rod and placed against the heads of the piston with gauged adjustments to a given clearance and the interpositioning of seals. However, even by limiting the clearances of such coupling, the slightest axial movements of the piston on the rod, especially when under pressure, cannot be eliminated.

A method of closing a piston body around a rod which consists of cold heading or bending a neck protruding from a head of the piston into a peripheral groove on the rod is also known for instance from GB-A- 1,177,777. This is carried out by a single closing action on the piston which is opposite to a back drafted stationary support so as to deviate and cold head said neck in the corresponding groove. Even in this case, the closure obtained does not exclude the possibility of axial movements when under pressure.

The object of the present invention is to solve the problem of the closure of a piston on a rod and to obviate the above mentioned inconveniences so as to eliminate any movement of the piston on the rod, even when under pressure. Another object of the invention is to propose a coupling between a piston and a rod with an efficient axial seal which is both mechanical and hydraulic.

Said problems are solved with a method which either closes or fixes a piston body onto a rod between an axial stop ring on one side and a neck, which is integral with the piston, on the opposite side, where the neck is either cold headed or bent into peripheral groove on the rod with the help of a back drafted fixed support. The method forsees the need for:
a) a first axial thrust which is applied to the rod for an elastic pre-loading of the coupling; and
b) a second stronger axial thrust which is applied to the piston for the completion of the coupling, whilst the first axial thrust is maintened on the rod.

Said method is thus carried out in two consecutive stages and with a stronger thrust in the second stage than the one in the first. The final thrust applied to the piston is necessary so as to eliminate the coupling movements and assure both a mechanical and hydraulic axial seal of the piston on the rod which is obtained by the cold heading or bending of the neck into the groove.

The equipment for using the above mentioned method comprises a back drafted fixed support for the cold heading and bending of the neck, which is integral with the piston, into the groove of the rod and is characterized in that it also comprises two thrust members which coaxially extend into each other, which are operated by respective actuators of different power and which are designed to engage on the rod and on the piston in subsequent stages.

Further details of the invention will seem clearer following the description with references being made to the attached drawing in which:
- Fig. 1: is a section of a rod with a piston on a check support; and
- Fig. 2: is a schematic view of the equipment.

In said drawing, a piston (10) formed of a separate body is designed to be fixed onto a piston rod (11) between two grooves (12, 13). A stop ring (14) which rests against a surface of the piston is set in one of the grooves whilst a neck (15) which is integral with the other surface of the piston is cold headed or bent into the other groove.

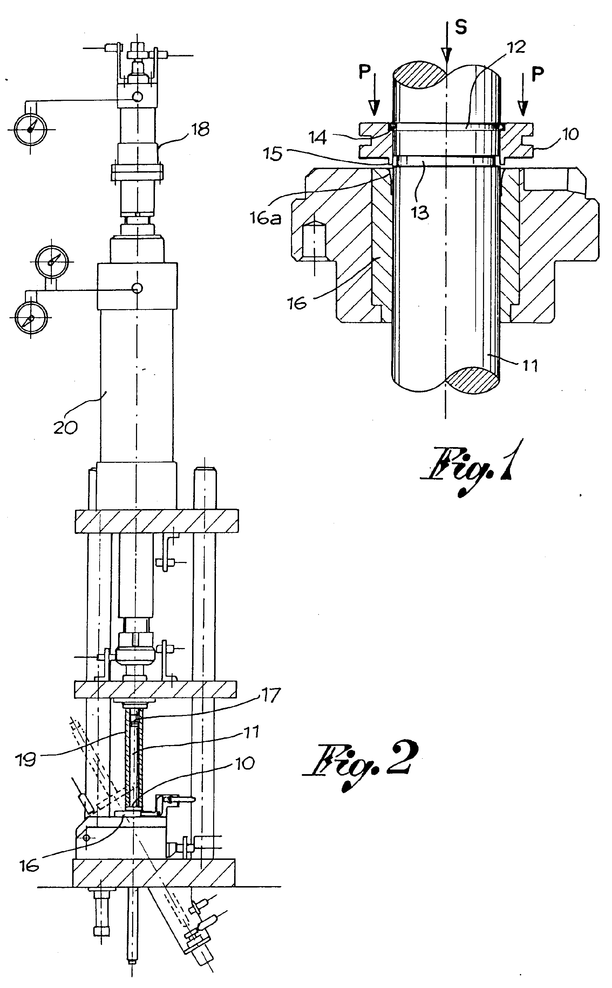

So as to close the piston on the rod, equipment as shown in Fig. 2 is used, where there is a support block (16), a first thrust member (17) moved by a respective hydraulic or pneumatic cylinder (18) and a second thrust member moved by a respective hydraulic or pneumatic cylinder (20).

The support block (16) has a counter-shape (16a) so as to cause the cold heading or bending of the neck (15) of the piston (10) into the corresponding groove (13) of the rod (11). The first member (17) coaxially extends into the second member (19) which is tubular, and both members (17, 19) are aligned on the axis of the support block (16).

The cylinders (18, 20) which control the thrust members (17, 19) do not have the same power and are however necessary until the first cylinder develops a force (S) on the member (17) which is weaker than the thrust (P) developed by the second cylinder on the other member (19).

For the closure as in accordance with the present invention, the piston and rod (10, 11) together are placed onto the support block (16) with the neck (15) of the piston turned towards said block. The piston is axially held on the opposite side to the ring (14) engaged in the groove (12) of the rod (Fig. 1). At this point an axial force (S) is applied to the rod (11) by the first member (17) for an elastic pre-loading of the coupling through an initial cold-heading of the neck (15) into the groove (13). A stronger force (P) is then applied to the piston (10) by the second member (19) whilst maintaining the axial thrust (S) on the rod (11). In this way, the completion of the cold heading (15) in the groove (13) for a mechanical closure between piston and rod is obtained, thus assuring both an axial and hydraulic sealing of the coupling and impeding any movement of the piston on the rod when they are operating and under pressure. The same result can, what is more, be achieved with the application of the closing force to another part of the piston.

## Claims

1. A method for closing or fixing a piston body (10) on a rod (11) between an axial stop ring (14) on one side and a neck (15), which is integral with the piston, on the opposite side, where the neck is cold headed into a peripheral groove (13) on the rod with the help of a counter-shaped (16a) fixed support (16), characterized in that it comprises the steps of applying in succession:
a) a first axial thrust (S) to the rod (11) for an elastic pre-loading of the coupling; and
b) a second axial thrust (P), stronger than the first (S), to the piston (20) for the completion of the coupling, whilst the first axial thrust is maintained on the rod.

2. A method as claimed in claim 1, characterized in that the second axial thrust (P) is applied in the opposite direction to the first force (S) on the rod, thus making the piston rest against a stationary support.

3. Equipment for the closure or fixing of a piston body (10) on a rod (11) with a method as claimed in claims 1 or 2, comprising a counter-shaped (16a) fixed support (16) for the cold heading or bending of a neck (15), which is integral with a head of the piston, into a peripheral groove of the cylinder, whilst an axial stop ring is co-ordinated to the other head of the piston, characterized in that it also comprises two thrust members (17, 19) which coaxially extend into each other, are operated by respective actuators (18, 20) of different power and are controlled so as to engage on the rod (11) and on the piston (10) to be coupled in subsequent stages.

## Patentansprüche

1. Verfahren zum Verriegeln oder Befestigen des Körpers eines Kolbens (10) an einer Kolbenstange (11) zwischen einem axialen Anschlag (14) an der einen Seite und einem mit dem Kolben integrierten Kragen (15) an der gegenüberliegenden Seite, welcher Kragen (15) unter Zuhilfenahme eines entsprechend gegengeformten (16a) festen Trägers (16) in einer Umfangsnut (13) an der Kolbenstange durch Kaltstauchen eingefügt wird, dadurch gekennzeichnet, daß es die aufeinanderfolgenden Schritte enthält:
a) einen auf die Kolbenstange (11) ausgeübten ersten axialen Schub oder Stoß (S) zu dem Zwecke, die Koppelung elastisch vorzuspannen, und
b) zur Vervollständigung der Koppelung einen auf den Kolben (20) ausgeübten, gegenüber dem ersten Schub (S) stärkeren zweiten axialen Schub oder Stoß (P) unter Aufrechterhaltung des ersten Schubs oder Stoßes auf die Kolbenstange (11) auszuüben.

2. Verfahren nach Anspruch 1, dadurch gekennzeichnet, daß der zweite axiale Schub oder Stoß (P) in einer Richtung ausgeübt wird, die entgegengesetzt zu derjenigen der den ersten Schub oder Stoß (S) auf die Kolbenstange ausübenden Kraft verläuft, wobei man den Kolben sich an einem ortsfesten Support abstützen läßt.

3. Vorrichtung zur Ausübung des Verfahrens nach Anspruch 1 oder 2, dadurch gekennzeichnet, daß sie einen entsprechend gegengeformten (16a) festen Träger (16) für das Einfügen in eine Umfangsnut des Zylinders durch Kaltstauchen oder Biegen eines mit dem Kolben integrierten Kragens (15) enthält, während der anderen Kopfseite des Kolbens ein axialer Anschlagring (14) zugeordnet ist, daß die Vorrichtung darüber hinaus noch zwei Schub- und Stoßorgane (17, 19) besitzt, die sich in koaxialer Anordnung zueinander erstrecken und durch entsprechende Antriebsorgane (18, 20) unterschiedlicher Leistung betätigt und so gesteuert werden, daß sie an der Kolbenstange (11) und am Kolben (10) angreifen, die in nachfolgenden Phasen zu koppeln sind.

## Revendications

1. Méthode pour fermer ou fixer un corps de piston (10) sur une tige (11) entre, d'une part, une rondelle de butée axiale (14) et, d'autre part, un col (15) formant partie intégrante du piston, et où le col est enfoncé à froid dans une rainure périphérique (13) sur la tige à l'aide d'un support fixe (16) contre-profilé (16a), caractérisée par le fait que la méthode comprend les phases d'application successives :
a) une première poussée axiale (S) sur la tige (11) afin de donner une tension élastique à l'assemblage; et
b) une deuxième poussée axiale (P) plus forte que la première (S) sur le piston (20) pour achever complètement l'assemblage, tout en maintenant la première poussée axiale sur le piston.

2. Méthode conforme à la revendication 1, caractérisée par le fait que la deuxième poussée axiale (P) est appliquée à la tige dans la direction opposée à la première force (S) en posant le piston sur un support fixe.

3. Outillage pour fermer ou fixer un corps de piston (10) sur une tige (11) selon une méthode conforme aux revendications 1 et 2, comprenant un support fixe (16) contre-profilé (16a) pour plier ou enfoncer à froid un col (15), qui fait partie intégrante de la tête du piston, dans une rainure périphérique du cylindre, tandis qu'une rondelle de butée axiale est ajustée à l'autre tête du piston, outillage caractérisé par le fait qu'il comporte aussi deux organes de poussée (17,19) en position coaxiale l'un par rapport à l'autre, actionnés par leurs actionneurs respectifs (18,20) de puissance différente et dirigés de façon à s'engager sur la tige (11) et sur le piston (10) qu'il faut assembler en phases successives.
